# EUROPÄISCHE PATENTANMELDUNG

(11) **EP 1 347 316 A1**
(43) Veröffentlichungstag der Anmeldung: **24.09.2003**
(21) Anmeldenummer: 03003018.3
(22) Anmeldetag: 12.02.2003
(51) Int. Cl.: G02B 6/00

(54) **Hinterleuchtungseinrichtung**

(30) Priorität: 19.03.2002 DE 10211967
(71) Anmelder: Preh-Werke GmbH & Co. KG, 97616 Bad Neustadt a.d. Saale (DE)
(72) Erfinder: Glienicke, Haiko, 97616 Bad Neustadt (DE)
(74) Vertreter: Dietrich, Barbara

(57) **Zusammenfassung**

Die vorgeschlagene Einrichtung setzt anstelle eines Reflektors oder eines Lichtleiters ein beliebig eingefärbten Kunststoff (1, 13) mit eingebrachtem Hohlraum (2, 14) und einer vorzugsweise polierten Innenoberfläche (2.5, 14.5) ein, um eine erhöhte Reflexion bei streifender Inzidenz (große Einfallswinkel gegen die Normale) auszunutzen. In diesem Hohlraum (2, 14) bzw. an der Innenoberfläche (2.5, 14.5) wird das Licht (a) einer Lichtquelle (3, 12) durch Reflexion zum Symbol (6, 11) transportiert. Die Lichtquelle (3, 12) ist dabei vorzugsweise flach aufgebaut.

## Beschreibung

Bekannte Symbolhinterleuchtungen beispielsweise für Bediengeräte, Betätigungselemente usw., weisen Reflektoren aus weißem Kunststoff, Lichtleiter oder eine freie Luftstrecke bei einer direkten Ausleuchtung auf.

So wird in der DE 92 16 107 U1 eine Leuchtanzeige offenbart, die, um ein Licht gebündelt an ein Symbol zu übertragen, einen lichtleitenden Körper aufweist, der, von der Lichtaustritts- zur Lichteintrittsöffnung betrachtet, eine bauchige S-Form besitzt.

Aus der DE 199 43 589 A1 ist ein Lichtleiterpilz bekannt, über den Licht einer Lichtquelle mittig in den Pilz eingekoppelt und über diesen zu einer Skala geführt wird. Der Lichtaustritt ist dabei außermittig.

Mit beiden Ausführungsformen lassen sich ein optimaler Lichttransport nicht realisieren.

Die Erfindung stellt sich die Aufgabe, eine Hinterleuchtungseinrichtung aufzuzeigen, die eine effektivere Lichtausnutzung einer Lichtquelle für ein auszuleuchtendes Symbol als auch bei relativ großen Entfernungen zwischen Lichtquelle und Symbol bzw. bei relativ kleinen Symbolen realisiert.

Gelöst wird die Aufgabe durch die Merkmale des Patentanspruchs 1.

Der Erfindung liegt die Idee zugrunde, den Lichttransport anstelle mittels eines Reflektors oder eines Lichtleiters über einen beliebig eingefärbten Kunststoff mit eingebrachtem Hohlraum und einer vorzugsweise polierten Innenoberfläche durchzuführen, wobei eine erhöhte Reflexion bei streifender Inzidenz (große Einfallswinkel gegen die Normale) ausgenutzt wird. In diesem Hohlraum bzw. an der Innenoberfläche wird das Licht einer Lichtquelle durch Reflexion zum Symbol transportiert. Die Lichtquelle selbst sollte dabei vorzugsweise flach aufgebaut sein.
Die Einfallswinkel des Lichtes werden möglichst groß gehalten. Von besonderem Vorteil sind Winkel > 70°.
Der Hohlraum setzt sich aus einer oder mehreren Teilflächen, die vorzugsweise Teilflächen eines Ellipsoid sind, zusammen. Die Auswahl der Halbachsen der Ellipsoidteilflächen erfolgt jeweils nach den Gesichtspunkten große Lichteinfallswinkel (gegen die Flächennormale) und Abdeckung großer Emissions-Raumwinkelbereiche der Lichtquellen in denen die Lichtstärke groß ist. Die verschiedenen Teilflächen können jeweils verschiedene Halbachsen haben.

Wenn sich Reflektorteile gegeneinander bewegen, wie beispielsweise bei der Ausleuchtung eines Zeigersymbols in einem Drehknopf mit zentraler Ausleuchtung, können auch Rotationsflächen mit Ellipsen-Profil verwendet werden. Lichtquelle bzw. Symbol befinden sich jeweils in einem Brennpunkt der Ellipse bzw. des Ellipsoids.

Durch die Lösung kann der Betriebsstrom einer Lichtquelle verringert werden. Auch können kostengünstige LED's eingesetzt werden. Durch die Verringerung des Betriebsstromes werden die Lebensdauer der Lichtquelle verlängert und die Abwärmeentwicklung reduziert. Ein weiterer Vorteil ist, dass der zu durchleuchtende Bereich eine höhere Wandstärke ausweisen kann.

Durch Ausnutzung der Reflexion mit streifender Inzidenz auf der Kunststoffoberfläche sind die optischen Eigenschaften des Reflektors von der Materialeinfärbung unabhängiger. Es können auch dunkle Einfärbungen verwendet werden.

Anhand eines Ausführungsbeispieles mit Zeichnung soll die Erfindung näher erläutert werden.

Es zeigt
- Fig. 1: eine Prinzipdarstellung,
- Fig. 2: eine Anwendung in einem Drehschalter.

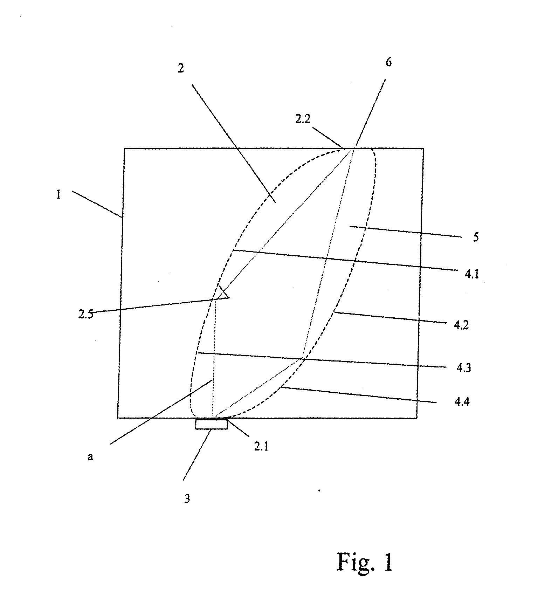

In Fig. **1** ist in einer Prinzipdarstellung ein Kunststoff 1 mit einem Hohlraum 2 dargestellt, welcher schräg verlaufend im Kunststoff 1 eingebettet ist. Unterhalb des Kunststoffes 1, der auch eingefärbt sein kann, befindet sich eine Lichtquelle 3, eine LED. Das Licht a der LED 3 wird in eine Lichteintrittsöffnung 2.1 des Hohlraumes 2 in diesen eingespeist und durch Reflexion an den Teilflächen 4.1, 4.2 sowie 4.3 und 4.4 des vorzugsweise als Ellipsoid 5 ausgebildeten Hohlraumes 2 zum Symbol 6 transportiert, wobei die Lichtauskopplung über eine Lichtaustrittsöffnung 2.2 erfolgt.
Bei einem senkrecht zur Lichtquelle 3 ausgerichteten Hohlraum 2 ist das auszuleuchtende Symbol 6 vorzugsweise direkt oberhalb der Lichtquelle 3.

Dieses Symbol 5 kann ein Such - oder ein Funktions- bzw. Zeigersymbol eines Betätigungselementes etc. sein, welches mittels einer zentrisch angebrachten Lichtquelle 12 ausgeleuchtet werden soll.

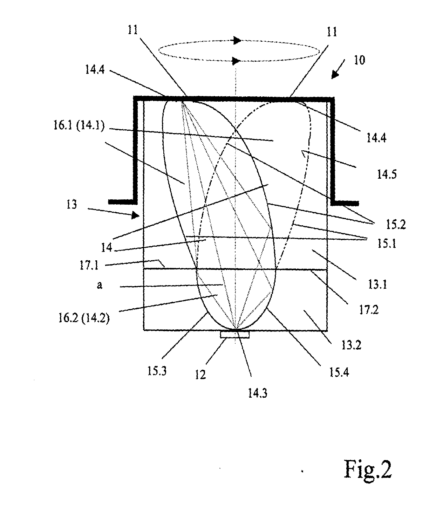

Fig. 2 zeigt in einer vereinfachten Darstellung eine derartige Anwendung in einem Drehschalter oder dergleichen, der im Drehknopf 10 ein Symbol 11 aufweist, welches mit der Lichtquelle 12 ausgeleuchtet werden soll. Die Teile des Drehschalters, die für dessen eigentlichen Funktion dienen, sind in dieser Darstellung der Übersichtlichkeit halber nicht dargestellt.
Ein für diese Anwendung verwendetes Kunststorfteil 13 weist ein gegenüber einem unteren Teil 13.2 bewegbares oberes Teil 13.1 auf, in welche jeweils ein Teil 14.1, 14.2 eines gemeinsamen Hohlraumes 14 eingebettet sind. Die Trennung beider Hohlteile 14.1, 14.2 erfolgt über Rotationsflächen 17.1, 17.2. Der Hohlraum 14 besteht aus Reflektorflächen 15.1, 15.2 sowie 15.3, 15.4, die vorzugsweise ein Ellipsoidteil 16.1 und ein Ellipsenprofilteil 16.2 bilden, die durch die Rotationsflächen 17.1, 17.2 getrennt sind.
Das Licht a wird von der Lichtquelle 12 in den Hohlraum 14 über eine Lichteintrittsöffnung 14.3 eingespeist und innerhalb der beiden Profilteile 16.1 und 16.2 durch Reflexion an den Teil- bzw. Reflektorflächen 15.1-15.4 zum Symbol 11 transportiert.
Durch eine Lichtaustrittsöffnung 14.4 wird das Symbol 11 mit Licht a versorgt.

Beim Verdrehen des Drehschalters 10 wird das obere Kunststoffteil 13.1 mit verdreht, wodurch auch das Profilteil 16.1 seine Position zur Lichtquelle 12 verändert, wie in Fig. 2 dargestellt.
Der Hohlraum 2 bzw. 14 weist vorzugsweise eine polierte Innenoberfläche 2.5 bzw. 14.5 auf.

## Patentansprüche

1. Hinterleuchtungseinrichtung, insbesondere für ein Symbol eines Betätigungelementes, bestehend aus einem Kunststoff und ausweisend eine Lichtquelle, **dadurch gekennzeichnet, daß**
- in den Kunststoff (1, 13) ein Hohlraum (2, 14) eingebettet ist, der von einer Lichteintrittsöffnung (2.1, 14.1) des Lichtes (a) der Lichtquelle (3, 12) zur Lichtaustrittsöffnung (2.2, 14.2) im Kunststoff (1, 14) verläuft.

2. Hinterleuchtungseinrichtung nach Anspruch 1, **dadurch gekennzeichnet, daß** der Hohlraum (2, 14) im Kunststoff (1, 13) schräg eingebettet ist.

3. Hinterleuchtungseinrichtung nach Anspruch 1, **dadurch gekennzeichnet, daß** der Hohlraum (2, 14) im Kunststoff (1, 13) senkrecht zur Lichtquelle (3, 12) verläuft.

4. Hinterleuchtungseinrichtung nach einem der Ansprüche 1 bis 3, **dadurch gekennzeichnet, daß** der Hohiraum (2, 14) eine polierte Innenoberfläche (2.5, 14.5) aufweist.

5. Hinterleuchtungseinrichtung nach einem der Ansprüche 1 bis 4, **dadurch gekennzeichnet, daß** die Einfallswinkel des Lichtes (a) > 70° sind.

6. Hinterleuchtungseinrichtung nach einem der Ansprüche 1 bis 5, **dadurch gekennzeichnet, daß** der Hohlraum (2, 14) sich aus einer oder mehreren Teilflächen (4.1-4.4, 15.1-15.4) zusammensetzt.

7. Hinterleuchtungseinrichtung nach Anspruch 6, **dadurch gekennzeichnet, daß** die Teilflächen (4.1-4.4, 15.1-15.4) die eines Ellipsoids (5, 16.1, 16.2) sind.

8. Hinterleuchtungseinrichtung nach einem der Ansprüche, **dadurch gekennzeichnet, daß** die Auswahl der Halbachsen der Ellipsoidteilflächen (4.1- 4.4, 15.1-15.4) nach den Gesichtspunkten große Lichteinfallswinkel gegen die Flächennormale und Abdeckung großer Emissions-Raumwinkelbereiche der Lichtquellen in denen die Lichtstärke groß ist, erfolgt.

9. Hinterleuchtungseinrichtung nach Anspruch 8, **dadurch gekennzeichnet, daß** die verschiedenen Teilflächen (4.1-4.4, 15.1-15.4) verschiedene Halbachsen haben können.

10. Hinterleuchtungseinrichtung nach einem der Ansprüche, **dadurch gekennzeichnet, daß** bei sich gegeneinander bewegbaren Reflektorteilen (13.1, 13.2) mit Hohlräumen (14.1, 14.2) Rotationsflächen (17.1, 17.2) eingebunden sind, wobei die Lichtquelle (12) und das Symbol (11) sich jeweils in einem Brennpunkt der Ellipse bzw. des Ellipsoids befinden.

11. Hinterleuchtungseinrichtung nach einem der Ansprüche, **dadurch gekennzeichnet, daß** die Rotationsflächen (17.1, 17.2) zwei voneinander getrennte Ellipsen- bzw. Ellipsoid-Profilteile (16.1, 16.2) bilden.
